# EUROPÄISCHE PATENTANMELDUNG

(11) **EP 1 327 520 A1**
(43) Veröffentlichungstag der Anmeldung: **16.07.2003**
(21) Anmeldenummer: 02090010.6
(22) Anmeldetag: 14.01.2002
(51) Int. Cl.: B41F 13/08, B65H 27/00, D06B 23/02, D06C 15/08, D21G 1/02, F16C 13/00

(54) **Walze für technische oder graphische Anwendungen**

(71) Anmelder: Paul Sauer GmbH & Co. Walzenfabrik KG, 10179 Berlin (DE)
(72) Erfinder: Sauer, Alexander, 10179 Berlin (DE); Zisenis, Mathias, 10551 Berlin (DE)

(57) **Zusammenfassung**

Eine Walze für technische oder graphische Anwendungen besteht im wesentlichen aus nichtmetallischen Werkstoffen. Die Walze weist insbesondere einen Walzenkern (1) oder einen Walzengrundkörper (4) aus nicht-metallischem Werkstoff auf. Zudem sind auch Lagersitze (5) und Lager (3) vorzugsweise aus nicht-metallischem Werkstoff. Die Walze findet Verwendung in üblichen technischen und graphischen Anwendungen. Die Walze kann im Einwegverfahren verwendet und nach Gebrauch direkt einem chemischen, mechanischen oder thermischen Recyclingverfahren zugeführt werden.

## Beschreibung

Die Erfindung betrifft eine Walze für technische oder graphische Anwendungen, die so aufgebaut ist, dass sie möglichst wenige metallische Elemente oder Bauteile aufweist, so dass sie nach Gebrauch direkt einem Recyclingverfahren zugeführt werden kann.

Für technische und graphische Anwendungen ist eine Vielzahl von Walzentypen bekannt. In technischen Anwendungen finden diese beispielsweise Verwendung zum Transport von Waren, Warenbahnen oder Medien (z.B. Transportwalze, Umlenkwalze, Zugwalze oder Förderwalze), zur mechanischen Bearbeitung von Oberflächen oder Substanzen (z.B. Schälwalzen oder Quetschwalzen) oder zum Auftrag fester oder flüssiger Medien auf eine Oberfläche (z.B. Prägewalzen, Kaschierwalzen, Lackierwalzen oder Leimauftragwalzen). In graphischen Anwendungen finden Walzen beispielsweise Verwendung in Druck- oder Lackiermaschinen. Dort werden sie je nach ihrer jeweiligen Funktion beispielsweise als Lack-, Tauch-, Duktor-, Heber-, Übertrag-, Verreib-, Auftrag- oder Gegendruckwalze bezeichnet.

All diesen Walzen ist gemeinsam, dass sie neben einem Walzenmantel auf Basis elastomerer oder elastischer Kunststoffe noch wesentliche Bestandteile auf Basis metallischer Werkstoffe aufweisen, beispielsweise Walzenkerne, Walzengrundkörper und Lagersitze. Diese sind so gestaltet, dass die Walzen den jeweiligen mechanischen und dynamischen Beanspruchungen, denen sie im Betrieb ausgesetzt sind, dauerhaft standhalten. Nach Gebrauch werden diese Walzen in der Regel einem Aufarbeitungsverfahren zugeführt, bei dem der Walzenkern oder Walzengrundkörper vom Walzenmantel befreit und mit einem neuen Walzenmantel bezogen wird. Damit ist seitens des Betriebes, der die Walze einsetzt, insbesondere mit der Rückgabe der z.T. recht schweren Walzen und seitens des Walzenherstellers mit dem Rücktransport und der Handhabung der Walzen zur Neubemantelung ein enormer Aufwand verbunden. Besonders wenn der Betrieb weit vom Walzenhersteller entfernt ist, beispielsweise sich in einem anderen Land oder Kontinent befindet, gestaltet sich der Transport der Walzen teuer und zeitaufwendig. Damit der Betrieb dennoch seine im täglichen Geschäft geforderte kurze Reaktionszeit auf Produktionsausfälle oder geänderte Produktionsabläufe gewährleisten kann, ist er gefordert, neben den im Einsatz und zur Erneuerung befindlichen Walzen ein umfangreiches Ersatzteillager zu führen.

Vor diesem Hintergrund bestand die Aufgabe, Walzen für technische und graphische Anwendungen bereit zu stellen, deren Einsatz und Handhabung deutlich verbessert ist. Diese Aufgabe wird dadurch gelöst, dass Walzen bereitgestellt werden, die im wesentlichen aus nicht-metallischen Werkstoffen bestehen.

Die Erfindung betrifft daher Walzen für technische oder graphische Anwendungen, die im wesentlichen aus nicht-metallischen Werkstoffen bestehen. Diese Walzen weisen gegenüber handelsüblichen Walzen insbesondere Walzenkerne oder Walzengrundkörper aus nicht-metallischen Werkstoffen auf.

Die erfindungsgemäße Walze kann gegebenenfalls mit Lagern ausgestattet sein. Zudem kann sie je nach ihrer Anwendung funktionelle Elemente aufweisen, die beispielsweise zur Temperierung oder zur Bewegung (z.B. changieren, vibrieren, pendeln) der Walze dienen. Die Lager und die funktionellen Elemente können wahlweise aus metallischen oder nicht-metallischen Werkstoffen bestehen. Vorzugsweise enthalten sie im wesentlichen nicht-metallische Werkstoffe.

Die erfindungsgemäße Walze kann nach Abnutzung prinzipiell auch mit einem neuen Walzenmantel versehen werden. Vorteilhaft wird sie jedoch im Einwegverfahren eingesetzt, d.h. sie wird nach dem Gebrauch direkt einem Entsorgungs- oder Recyclingverfahren zugeführt. Aus ökologischen Gründen empfiehlt sich dabei ein chemisches, mechanisches oder thermisches Recyclingverfahren, bei dem beispielsweise anorganische und organische Bestandteile des Walzenmaterials voneinander getrennt werden, das Walzenmaterial in niedermolekulare chemische Bestandteile oder in wiederverwertbare Partikel, z.B. Schnipsel, Granulat oder Mahlgut, zerlegt wird oder die thermische Energie des Walzenmaterials ausgenutzt wird. Durch das Einwegverfahren werden einerseits Transportkosten minimiert, andererseits sind seitens des Betriebes weniger Walzen zu beschaffen, da neben den im Einsatz befindlichen Walzen und dem Ersatzteillager keine weiteren Walzen benötigt werden. Die Walzen können auch vom Walzenhersteller bevorratet und auf Abruf geliefert werden, so dass sich die Lagerhaltung und die Reaktionszeit für den Betrieb deutlich verringert.

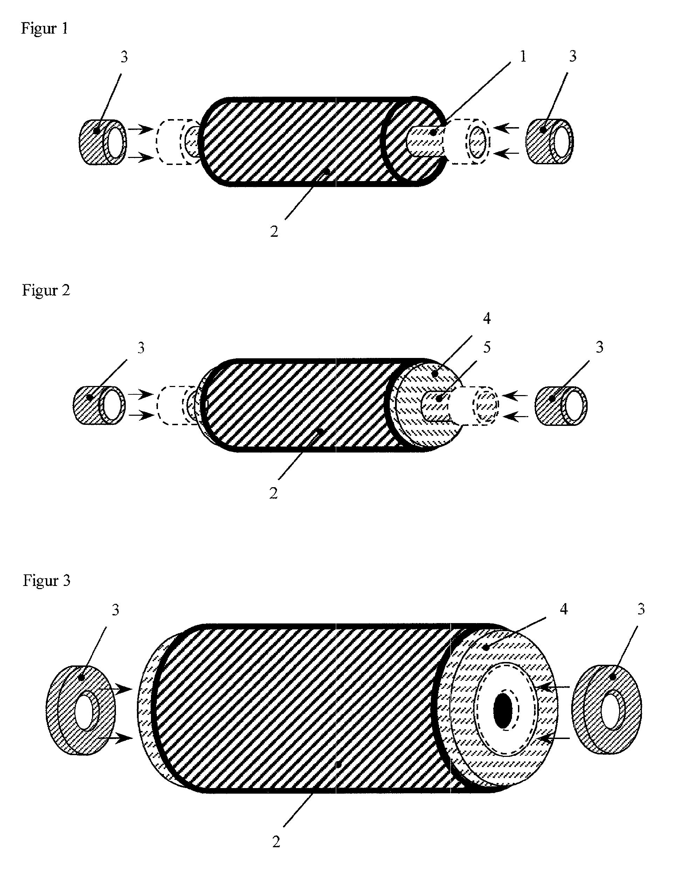

Die Figuren 1 bis 3 zeigen schematisch mögliche Ausführungsformen der erfindungsgemäßen Walze. So ist in Figur 1 eine Walze mit einem Walzenkern 1 und einem Walzenmantel 2 dargestellt. Zum Betrieb der Walze wird diese mit Lagern 3 versehen und in entsprechende Aufnahmen eingesetzt. Die Lager 3 können wahlweise nachträglich montiert werden oder einen integrierten Bestandteil der erfindungsgemäßen Walze darstellen. Der Walzenkern 1 kann innen ausgefüllt (z.B. stabförmig) oder innen hohl (z.B. rohrförmig) ausgeführt sein. Er kann in einem Stück aus einem nicht-metallischen Werkstoff gefertigt sein, er kann aber auch aus mehreren Teilen oder Schichten aufgebaut sein, beispielsweise schalenförmig, gewickelt, als hohle Hülle oder als mit Material ausgefüllter Hüllkörper. Rohrförmige Walzenkerne können zudem Stützelemente wie Stützringe oder Stützscheiben oder verstärkende Strukturen wie Verstrebungen, Gitter- oder Netzwerke aufweisen.

Figur 2 zeigt eine Walze mit einem Walzenmantel 2, einem Walzengrundkörper 4 sowie Lagersitzen 5, die wahlweise Lager 3 aufweisen. Der Walzengrundkörper 4 kann innen ausgefüllt (z.B. stabförmig) oder innen hohl (z.B. rohrförmig) ausgeführt sein. Er kann in einem Stück aus einem nicht-metallischen Werkstoff gefertigt sein, er kann aber auch aus mehreren Teilen oder Schichten aufgebaut sein, beispielsweise schalenförmig, gewickelt, als hohle Hülle oder als mit Material ausgefüllter Hüllkörper. Rohrförmige Walzenkerne können zudem Stützelemente wie Stützringe oder Stützscheiben oder verstärkende Strukturen wie Verstrebungen, Gitter- oder Netzwerke aufweisen. Die Lagersitze 5 können aus dem gleichen Werkstoff wie der Walzengrundkörper 4 oder aus einem anderen Werkstoff bestehen. Walzengrundkörper 4 und Lagersitze 5 können aus einem oder mehreren Stücken bestehen. Stellen die Lagersitze 5 eigenständige Bauteile dar, so sind an den Stirnseiten des Walzengrundkörpers vorteilhaft zentrierte Aussparungen zur Aufnahme der Lagersitze 5 vorgesehen. Die Lagersitze 5 können aber je nach den verwendeten Werkstoffen auch mit anderen Techniken, beispielsweise Schweiß- oder Klebeverfahren, mit dem Walzengrundkörper verbunden werden.

In Figur 3 ist eine Walze dargestellt, bei der die Stirnseiten des Walzengrundkörpers 4 mit zentrierten Aussparungen oder mit Vorrichtungen zur direkten Aufnahme von Lagern 3 versehen sind. Vorteilhaft sind dazu die Stirnseiten scheibenförmig gestaltet.

Walzenkerne 1 und Walzengrundkörper 4 der erfindungsgemäßen Walze bestehen im wesentlichen aus nicht-metallischen Werkstoffen auf Basis von unverstärkten oder verstärkten Kunststoffen (polymere Verbundwerkstoffe), Keramiken oder polymergebundenen Mineralgussen. Lager 3, die sowohl als Wälzlager als auch als Gleitlager ausgeführt sein können, und Lagersitze 5 bestehen wahlweise aus bekannten metallischen Werkstoffen und/oder aus nicht-metallischen Werkstoffen auf Basis von verstärkten oder unverstärkten Kunststoffen, Keramiken oder polymergebundenen Mineralgussen. Vorzugsweise bestehen die Lager und Lagersitze im wesentlichen aus nicht-metallischen Werkstoffen. Der Walzenmantel 2 kann vollständig aus elastomerem oder elastischem Kunststoff bestehen oder weist bei mehrschichtigem Aufbau mindestens eine Schicht aus elastomerem oder elastischem Kunststoffmaterial auf. Vorzugsweise ist dies die äußere die Manteloberfläche der Walze bildende Schicht des Walzenmantels. Weitere Schichten des Walzenmantels 2 können ebenfalls im wesentlichen nicht-metallische Werkstoffe auf Basis von imprägnierten Textilien, verstärkten oder unverstärkten Kunststoffen, Keramiken oder polymergebundenen Mineralgussen aufweisen.

Zu den verstärkten oder unverstärkten Kunststoffen zählen u.a. thermoplastische wie duroplastische Kunststoffe, die übliche Füllstoffe und Additive sowie wahlweise faser-, kugel-, pulver- oder partikelförmige Verstärkungsstoffe aus anorganischen oder organischen Materialen aufweisen, sowie sogenannte High-Tech Polymere oder Hochleistungskunststoffe, die teilweise nach für Kunststoffe untypischen Verfahren, z.B. Pressen oder Sintern, verarbeitet werden können. Bei faserverstärkten Kunststoffen können sowohl Endlosfasern als auch Kurzfasern mit einer mittleren Faserlänge von ca. 10 bis 300 µm und/oder Langfasern mit einer mittleren Faserlänge von größer 300 µm bis zu 50 mm, vorzugsweise von 0,4 mm bis 10 mm vorliegen. Endlos- und Langfasern sind vorzugsweise durch Pultrusionsverfahren in den jeweiligen Kunststoff eingearbeitet. Beispiele für Fasermaterialien sind Kohlenstofffasern (CFK), Synthesefasern (SFK), Glasfasern (GFK) sowie mineralische, keramische oder metallische Fasern. Nicht-faserförmige Verstärkungsstoffe können aus den gleichen Materialien wie faserförmige Verstärkungsstoffe bestehen und ähnliche mittlere Größen aufweisen. Der Anteil von Verstärkungsstoffen im Kunststoff beträgt üblicherweise ca. 30 bis 70 Gew.-%, vorzugsweise mehr als 50 Gew.-%. Verstärkungsstoffe können homogen im Kunststoff verteilt sein, insbesondere faserförmige Verstärkungsstoffe können aber auch in Form zwei- oder dreidimensionaler textiler Strukturen, z.B. als Gewebe, Geflechte oder Vliese vorliegen.

Zu den keramischen Werkstoffen zählen beispielsweise mineralische Keramiken, Glaskeramiken, Metallkeramiken, organische oder Polymerkeramiken (sinterbare Kunststoffe auf Basis von Silicium, z.B. Siliciumnitrid). Aus diesen Werkstoffen können beispielsweise Formteile (z.B. Lagersitze oder Lager), dünne Schichten oder Fasern hergestellt werden.

Polymergebundener Mineralguss ist auch unter den Bezeichnungen Polymerbeton und Reaktionsharzbeton bekannt. Er enthält im wesentlichen Bindemittel auf Basis eines Kunstharzes (z.B. Epoxidharz oder Polyesterharz) sowie meist anorganischen, silikatischen Füllstoff (z.B. Quarz, Granit, Basalt). Der Anteil des Kunstharzes beträgt dabei gewöhnlich 5 bis 15 Gew.-%. Bekannt sind diese Werkstoffe im Maschinenbau, wo sie beispielsweise als Konstruktionswerkstoff für Maschinenbetten oder zum Ausfüllen von Innen- oder Zwischenräumen verwendet werden. In den Walzen gemäß der Erfindung können diese Werkstoffe beispielsweise zur Herstellung von gegossenen Walzenkernen, rohrförmigen Schichten in Walzengrundkörpern oder von Lagersitzen eingesetzt werden.

Als elastomeres oder elastisches Kunststoffmaterial für den Walzenmantel 2 können
a) vulkanisierte Kautschuke wie synthetischer Kautschuk, z.B. Acrylnitril-Butadien-Kautschuk (NBR, HNBR, XNBR), Ethylenkautschuk (CM, CSM), Ethylen-Propylen-Kautschuk (EPM, EPDM), Styrol-Butadien-Kautschuk (SBR, XSBR), Butylkautschuk (IIR), Polyisopren-Kautschuk (IR), Polyester- und Polyetherurethan-Kautschuk (AU, EU), Polyacrylatkautschuk (ACM), Ethylen-Acrylatkautschuk (EAM), Epichlorhydrin-Kautschuk (CO, ECO, ETER), Polynorbornen-Kautschuk (PNR), Silikonkautschuk (MQ, MFQ, MVQ, MPQ, MPVQ), Fluorkautschuk (FKM), Chloropren-Kautschuk (CR) oder Naturkautschuk (NR),
b) elastische Thermoplaste, z.B. Polyvinylchlorid (PVC) oder elastifiziertes Polyolefin (z.B. PP-EPDM),
c) thermoplastisches Elastomer (TPE), z.B., Styrol-Blockcopolymerisat (z.B. SBS, SEBS, SIS), Copolyester-Elastomer oder thermoplastisches Polyurethan (TPU),
d) gieß- oder schäumbare Kunststoff-Materialien oder Mischungen der genannten Komponenten als Basis eingesetzt werden.

Das elastomere oder elastische Kunststoffmaterial ist entsprechend dem Einsatzzweck und der Funktion der jeweiligen Walze auszuwählen und zu modifizieren. Es kann zudem übliche Zusätze insbesondere Farbstoffe, Füllstoffe, Verstärkungsstoffe, Weichmacher und/oder Fasermaterial sowie weitere funktionelle Zusätze, beispielsweise Substanzen zur Einstellung der Hydrophilie oder Hydrophobie der Walzenoberfläche, enthalten. Diese können in das Kunststoffmaterial des Bezuges eingemischt oder - im Falle der Zusätze - reaktiv mit dem Kunststoffmaterial verbunden oder in dieses einpolymerisiert sein.

Bei der Herstellung der Walzen wird der Kautschuk in der Regel durch Vulkanisation vernetzt und erhält somit die gewünschte Festigkeit, während elastische Thermoplaste, thermoplastische Elastomere und gieß- bzw. schäumbare Kunststoffe durch die Abkühlung aus der Schmelze ihre Festigkeit erlangen. Der Walzenmantel kann wahlweise direkt bei seiner Fertigung auf den Walzenkern oder Walzengrundkörper aufgebracht werden oder wird für sich gefertigt und anschließend auf den Walzenkern oder Walzengrundkörper aufgezogen. Bildet ein Bezug aus elastomerem oder elastischem Kunststoff die äußere Schicht des Walzenmantels, so wird diese in der Regel oberflächlich geschliffen, um eine bestimmte Rautiefe oder eine bestimmte, beispielsweise zylindrische, konische oder ballige Form des Walzenmantels zu erhalten. Der Bezug des Walzenmantels kann bei Bedarf auch Einschnitte, Profilierungen, Texturen oder Gravierungen aufweisen. Beispielsweise kann die Oberfläche des Walzenmantels durch Einschnitte in zwei drei oder mehr Bereiche unterteilt werden oder die Oberfläche mit Radial- oder Axialgravuren versehen werden.

Walzenkerne und Walzengrundkörper der erfindungsgemäßen Walze sind in vielen Anwendungen im wesentlichen zylindrisch. Für bestimmte Anwendung können sie aber auch andere Formen aufweisen. Beispielsweise können sie ballig oder zu einer oder beiden Seiten hin kegelig oder konisch gestaltet sein. Insbesondere Walzenkerne, Walzengrundkörper, Lager und Lagersitze können zur optischen, chemischen oder mechanischen Modifizierung auch bekannten Methoden der Oberflächenbehandlung wie Plasmabehandlung, Pulverbeschichtung, Metallisierung, Galvanisierung etc. unterzogen werden.

Die erfindungsgemäße Walze kann in den für Walzen üblichen Anwendungen eingesetzt werden und dort gleichartige Walzen mit metallischen Walzenkernen oder Walzengrundkörpern ohne weiteres ersetzen. Die jeweilige Werkstoffauswahl und Konstruktion des Walzenkerns, des Walzengrundkörpers sowie der Lager und Lagersitze richtet sich insbesondere nach den zu erwartenden dynamischen und statischen Belastungen der Walze. Die Werkstoffauswahl und Ausführung des Walzenmantels richtet sich insbesondere nach der vorgesehenen Funktion der Walze und den im Einsatzfall mit dem Walzenmantel in Berührung tretenden Medien. Sofern die jeweiligen Anforderungen erfüllt werden, können ohne weiteres auch Recyclingmaterialien als Werkstoffe eingesetzt werden.

Die erfindungsgemäßen Walzen sind geeignet für technische Anwendungen, beispielsweise in der Holz-, Wellpappen-, Papier-, Kunststoff-, Verpackungsmittel-, Lebensmittel-, Textil-, Elektro-, Foto-, Stahl- oder Metallindustrie oder in Förder- oder Transportanlagen, sowie für graphische Anwendungen wie Buchdruck, Offsetdruck, Tiefdruck, Flexodruck oder Sonderdruckverfahren. Sie finden beispielsweise Verwendung als Tauch-, Duktor-, Heber-, Übertrag-, Verreib-, Auftrag- oder Gegendruckwalze in Farb-, Feucht- oder Lackierwerken von Rotations- und Bogendruckmaschinen, zum Transport von Waren, Warenbahnen und flüssigen Medien, beispielsweise als Transport-, Antriebs-, Zug-, Leit-, Umlenk-, Breitstreck-, Schöpf-, Anspül-, Kaschier- oder Leimwalze, sowie zur mechanischen Bearbeitung von Oberflächen oder nicht-flüssigen Medien, beispielsweise als Anpress-, Schäl-, Schneid-, Quetsch-, Press- oder Prägewalze.

## Patentansprüche

1. Walze für technische oder graphische Anwendungen, **dadurch gekennzeichnet, dass** die Walze im wesentlichen aus nicht-metallischen Werkstoffen besteht.

2. Walze nach Anspruch 1, **dadurch gekennzeichnet, dass** die Walze einen Walzenkern (1) oder einen Walzengrundkörper (4) mit Lagersitzen (5) oder Aussparungen zur Aufnahme von Lagern (3) sowie einen Walzenmantel (2) aufweist.

3. Walze nach Anspruch 2, **dadurch gekennzeichnet, dass** der Walzenkern (1) oder der Walzengrundkörper (4) im wesentlichen aus nicht-metallischen Werkstoffen besteht.

4. Walze nach einem der Ansprüche 1 bis 3, **dadurch gekennzeichnet, dass** die Walze Lager (3) aufweist, die wahlweise im wesentlichen aus metallischem oder nicht-metallischem Werkstoff bestehen.

5. Walze nach einem der Ansprüche 1 bis 4, **dadurch gekennzeichnet, dass** die Walze funktionelle Elemente aufweist, die wahlweise im wesentlichen aus metallischem oder nicht-metallischem Werkstorff bestehen.

6. Walze nach einem der Ansprüche 1 bis 5, **dadurch gekennzeichnet, dass** der nicht-metallische Werkstoff im wesentlichen
- unverstärkten Kunststoff,
- polymeren Verbundwerkstoff, insbesondere Faserverbundwerkstoff auf Basis von CFK, GFK oder SFK, wobei die Fasern wahlweise als Kurzfasern, Langfasern und/oder Endlosfasern vorliegen und Langfasern bzw. Endlosfasern vorzugsweise pultrudiert sind,
- keramischen Werkstoff, insbesondere glas-keramischen, metall-keramischen oder polymer-keramischen Werkstoff, der wahlweise Verstärkungsstoffe aufweist,
- oder polymergebundenen Mineralguss enthält oder ein diese Werkstoffe enthaltendes Verbundmaterial darstellt.

7. Walze nach einem der Ansprüche 2 bis 6, **dadurch gekennzeichnet, dass** der Walzenmantel (2) eine oder mehrere Schichten aufweist, von denen zumindest eine, vorzugsweise die äußere, elastomeres oder elastisches Kunststoffmaterial aufweist, insbesondere ein Elastomer oder einen elastischen Kunststoff auf Basis von
- vulkanisiertem Kautschuk, insbesondere Acrylnitril-Butadien-Kautschuk (NBR, HNBR, XNBR), Ethylenkautschuk (CM, CSM), Ethylen-Propylen-Kautschuk (EPM, EPDM), Styrol-Butadien-Kautschuk (SBR, XSBR), Polyisopren-Kautschuk (IR), Butylkautschuk (IIR), Polyester- und Polyetherurethan-Kautschuk (AU, EU), Polyacrylat-Kautschuk (ACM), Ethylen-Acrylat-Kautschuk (EAM), Epichlorhydrin-Kautschuk (CO, ECO, ETER), Polynorbornenkautschuk (PNR), Silikonkautschuk (MQ, MFQ, MPQ, MVQ, MPVQ), Fluorkautschuk (FKM, FFKM), Chloropren-Kautschuk (CR) oder Naturkautschuk (NR),
- elastischem Thermoplast-Material, insbesondere Polyvinylchlorid (PVC) oder elastifiziertes Polyolefin, oder
- thermoplastischem Elastomer (TPE), insbesondere Styrol-Blockcopolymerisat (SBS, SEBS, SIS), Copolyester-Elastomer oder thermoplastisches Polyurethan (TPU),
- gegossenem oder geschäumtem Kunststoff-Material, insbesondere auf Basis von Polyurethan
oder Mischungen der genannten Komponenten.

8. Verwendung einer Walze gemäß einem der Ansprüche 1 bis 7
- in Druck- oder Lackiermaschinen, insbesondere in Rotations- oder Bogenoffsetdruckmaschinen,
- zur Übertragung flüssiger Medien, insbesondere als Farb-, Feucht-, Lackier-, Leim-, Schöpf- oder Anspülwalze oder
- als Transport-, Antriebs-, Zug-, Leit-, Umlenk-, Breitstreck-, Kaschier-, Anpress-, Schäl-, Schneid-, Quetsch-, Press- oder Prägewalze.

9. Verfahren zur Wiederverwertung einer Walze gemäß einem der Ansprüche 1 bis 8, wobei im wesentlichen die komplette Walze nach Gebrauch einem Recyclingverfahren zugeführt wird, insbesondere einem chemischen, mechanischen oder thermischen Recyclingverfahren.

10. Verfahren zur Herstellung einer Walze für technische oder graphische Anwendungen, **dadurch gekennzeichnet, dass** zur Herstellung der Walze im wesentlichen nicht-metallische Werkstoffe verwendet werden.
